# EUROPÄISCHE PATENTANMELDUNG

(11) **EP 0 652 682 A2**
(43) Veröffentlichungstag der Anmeldung: **10.05.1995**
(21) Anmeldenummer: 94112146.9
(22) Anmeldetag: 03.08.1994
(51) Int. Cl.: H04Q 11/04, G06F 13/00

(54) **Schaltungsanordnung zum Bestimmen der Auftrittszeitpunkte von einer Mikroprozessoranordnung zugeführten Steuersignalen**

(30) Priorität: 30.08.1993 DE 4329153
(71) Anmelder: SIEMENS AKTIENGESELLSCHAFT, D-80333 München (DE)
(72) Erfinder: Rokitansky, Walter, Dipl.-Ing., D-81373 München (DE)

(57) **Zusammenfassung**

Die Bestimmung der Auftrittszeitpunkte von einem Mikroprozessor (MP) als Unterbrechungssignale zugeführten Steuersignalen erfolgt mit Hilfe der momentanen Zählerstände einer an ein Bussystem (ADR, DB, ST) dieses Mikroprozessors angeschlossenen Umlaufzählereinrichtung (C0). Deren jeweiliger momentaner Zählerstand wird bei einem unterbrechungsfreien Zählbetrieb durch einen auf eine Unterbrechung hin abgegebenen Lesebefehl festgehalten und vom Mikroprozessor übernommen. Dabei ist eine zweite Zähleinrichtung (C1) vorgesehen, welche lediglich mit dem Auftreten eines Steuersignals in einen Zählzyklus gesteuert wird. Der momentane Zählerstand dieser Zähleinrichtung wird mit dem Auftreten eines Lesebefehls ebenfalls festgehalten und von dem Mikroprozessor (MP) übernommen. Aus der Differenz der beiden gleichzeitig festgehaltenen momentanen Zählerstände wird dann der Auftrittszeitpunkt des jeweiligen Steuersignals ermittelt.

## Beschreibung

Die Erfindung betrifft eine Schaltungsanordnung zum Bestimmen der Auftrittszeitpunkte von einer Mikroprozessoranordnung als Unterbrechungssignale zugeführten Steuersignalen gemäß Oberbegriff des Patentanspruches 1.

Bei einer derartigen Schaltungsanordnung tritt das Problem auf, daß mit dem Auftreten eines Steuersignales, welches eine Unterbrechung des Mikroprozessors auslöst, bis zur Abgabe eines den momentanen Zählerstand der ersten Zähleinrichtung anfordernden Lesebefehls eine durch die Unterbrechungsverzögerungszeit bedingte relativ lange und je nach der momentanen Auslastung des Mikroprozessors variable Zeitspanne vergehen kann. Dadurch entspricht der momentane Zählerstand der ersten Zählereinrichtung beim Auslesen nicht mehr dem momentanen Zählerstand zum Zeitpunkt des Auftretens des betreffenden Steuersignales. Dies wirkt sich insbesondere dann negativ aus, wenn aufeinanderfolgende Steuersignale mit einer hohen Folgefrequenz auftreten, da in diesem Falle die Meßungenauigkeit relativ hohe Werte annehmen kann.

Es ist nun Aufgabe der vorliegenden Erfindung, einen Weg zu zeigen, wie eine Schaltungsanordnung gemäß Oberbegriff des Patentanspruches 1 ausgebildet werden kann, um die Auftrittszeitpunkte von Steuersignalen mit einer höheren Genauigkeit bestimmt werden können.

Gelöst wird diese Aufgabe durch die im Patentanspruch 1 aufgeführten schaltungstechnischen Merkmale.

Der Vorteil der vorliegenden Erfindung besteht dabei in dem geringen zusätzlichen schaltungstechnischen Aufwand in Form der zweiten Zähleinrichtung, um den durch die Unterbrechungsverzögerungszeit bedingten Fehler bei der Ermittlung des momentanen Zählerstandes der ersten Zähleinrichtung zu eliminieren.

Zweckmäßige Ausgestaltungen der vorliegenden Erfindung ergeben sich aus den Patentansprüchen 2 bis 4. Der Vorteil der Ausgestaltung gemäß Patentanspruch 3 besteht dabei darin, daß durch Verwendung einer dritten Zähleinrichtung mit einem geringen schaltungstechnischen Aufwand eine Taktregeleinrichtung realisierbar ist, deren Ausgangstaktsignale hinsichtlich der Phase unter der Steuerung des Mikroprozessors regelbar sind. Ein besonders geringer schaltungstechnischer Aufwand ergibt sich dabei, wenn gemäß Patentanspruch 4 die Zähleinrichtungen durch hinsichtlich des Zählbetriebes unabhängig voneinander programmierbare Zähleinrichtungen eines mit dem Bussystem des Mikroprozessors verbindbaren integrierten Zählerbausteines gebildet sind.

Im folgenden wird ein Ausführungsbeispiel der vorliegenden Erfindung anhand einer Zeichnung näher erläutert.

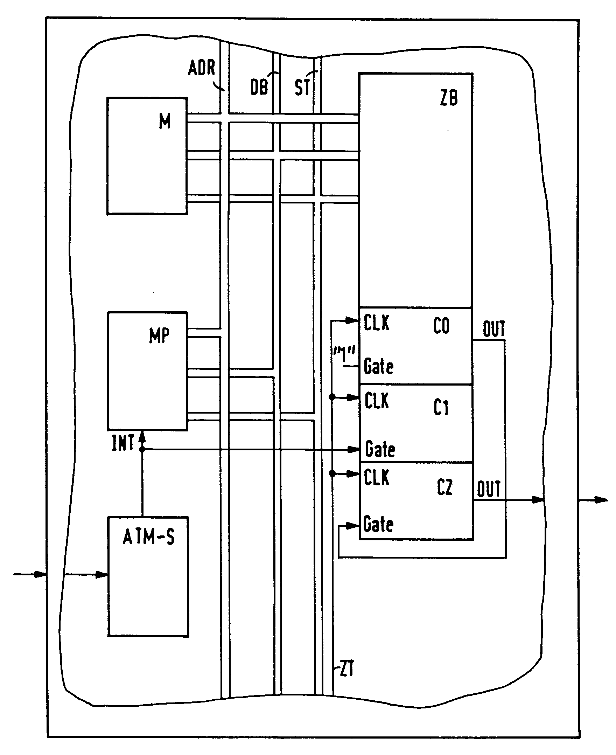

In der Zeichnung ist ausschnittsweise eine Mikroprozessoranordnung dargestellt, von welcher lediglich die für das Verständnis der vorliegenden Erfindung erforderlichen Schaltungselemente angegeben sind. Diese Mikroprozessoranordnung dient bei dem vorliegenden Ausführungsbeispiel für die Ableitung von Synchronisierimpulsen aus innerhalb eines nach einem asynchronen Transfermodus arbeitenden ATM-Kommunikationssystems übertragenen Synchronisierzellen. Diese Synchronisierzellen werden innerhalb des ATM-Kommunikationssystems in vorgegebenen Zeitabständen, z.B. nach jeweils 23,5 ms, in die zu übertragenden Nachrichtenzellenströme eingefügt.

Die Mikroprozessoranordnung weist dabei einen Mikroprozessor beispielsweise vom Typ 80186 der Intel Corporation auf, welcher über einen Unterbrechungseingang INT mit einer Schnittstelleneinrichtung ATM-S verbunden ist. An das Bussystem dieses Mikroprozessors, das aus einem Adressenbus ADR, einem Datenbus DB und einem Steuerbus SB besteht, ist neben einer die für den Betrieb der Mikroprozessoranordnung erforderlichen Programme enthaltenden Speicheranordnung M eine Zähleranordnung ZB beispielsweise in Form des Zählerbausteins 82C54 der Intel Corporation angeschlossen. Wie dem Datenbuch "Microprocessor and Peripheral Handbook, Vol. 1, Microprocessor", 1988, Seiten 2-46 bis 2-63, zu entnehmen ist, enthält dieser Zählerbaustein drei hinsichtlich des Zählbetriebes unabhängig voneinander programmierbare Zähleinrichtungen, die in der Zeichnung mit C0, C1 und C2 bezeichnet sind. Die Zähleinrichtung C0 wird bei dem vorliegenden Ausführungsbeispiel durch eine entsprechende Programmierung von dem Mikroprozessor MP her als freilaufender Umlaufspeicher betrieben. Für diesen Zählbetrieb wird nach dem genannten Datenbuch der Modus 2 ("Rate Generator") benutzt. Darüber hinaus ist der mit "Gate" bezeichnete Eingang auf den logischen Pegel "1" (VCC) gelegt, während der mit CLK bezeichnete Zähleingang mit einer Zähltaktimpulsfolge beaufschlagt ist. Die Folgefrequenz dieser Zähltaktimpulsfolge ZT beträgt bei dem vorliegenden Ausführungsbeispiel 2,048 MHz.

Die Zähleinrichtung C1 wird entsprechend dem in dem Datenbuch angegebenen Modus 1 ("Hardware Triggered One-Shot") als triggerbarer Zähler betrieben, welcher lediglich auf das Auftreten eines Steuersignals an dem mit "Gate" bezeichneten zugehörigen Eingang in einen Zählzyklus gesteuert wird, wobei als Anfangszählerstand für einen solchen Zählzyklus der Wert FFFF (H) gewählt ist. Als Zählimpulse erhält diese Zähleinrichtung an ihrem mit CLK bezeichneten Zähleingang die oben bereits erwähnte Zähltaktimpulsfolge zugeführt. Darüber hinaus ist der mit "Gate" bezeichnete Steuereingang dieser Zähleinrichtung mit der zuvor erwähnten Schnittstelleneinrichtung ATM-S verbunden.

Die Zähleinrichtung C2, die an ihrem Eingang CLK ebenfalls die Zähltaktimpulsfolge als Zählsignale zugeführt erhält, ist schließlich gemäß dem genannten Datenbuch im Modus 3 ("Square Wave Mode") betrieben. Zur Steuerung ist dabei der zugehörige Eingang "Gate" mit einem Zählerausgang OUT der Zähleinrichtung C0 verbunden. Für diesen Modus ist bei dem vorliegenden Ausführungsbeispiel als Zählperiode 48.128 (D) gewählt.

Im folgenden wird nun auf die Wirkungsweise der vorstehend erläuterten Mikroprozessoranordnung näher eingegangen.

Durch die Schnittstelleneinrichtung ATM-S wird fortlaufend das Auftreten von Synchronisierzellen innerhalb eines Nachrichtenzellenstromes überwacht. Diese Synchronisierzellen treten im Regelfalle im Abstand von 23,5 ms auf, wobei jedoch durch den asynchronen Transfermodus bedingte Laufzeitschwankungen auftreten könnnen. Auf jedes Auftreten einer solchen Synchronisierzelle hin wird von dieser Schnittstelleneinrichtung ein Steuersignal bereitgestellt, das einerseits dem Mikroprozessor MP als Unterbrechungssignal und andererseits der Zähleinrichtung C1 als Triggersignal zugeführt ist. Das Auftreten dieses Steuersignales bewirkt dabei, daß die Zähleinrichtung C1 in den Zählbetrieb gesteuert wird, in welchem diese, ausgehend von dem festgelegten Anfangszählerstand, fortlaufend ihren momentanen Zählerstand entsprechend der zugeführten Zähltaktimpulsfolge verändert. Darüber hinaus wird auf das Auftreten des betreffenden Steuersignals hin durch den Mikroprozessor MP das gerade laufende Betriebsprogramm unterbrochen und im Zuge einer Unterbrechungsroutine ein Lesebefehl ("Read-Back Command" gemäß dem genannten Datenbuch) über das zugehörige Bussystem an den Zählerbaustein ZB abgegeben. Dabei tritt dieser Lesebefehl je nach dem gerade laufenden Betriebsprogramm und damit je nach der momentanen Belastung des Mikroprozessors MP erst nach einer sog. Unterbrechungsverzögerungszeit auf. Diese kann von Unterbrechung zu Unterbrechung variieren. Typische Unterbrechungsverzögerungszeiten liegen dabei bei dem oben angegebenen Mikroprozessortyp in der Größenordnung von 50 bis 100 µs.

Das Auftreten des Lesebefehls bewirkt in dem Zählerbaustein ZB, daß die momentanen Zählerstände der beiden Zähleinrichtungen C0 und C1 ohne Unterbrechung des jeweiligen Zählbetriebes in einem der jeweiligen Zähleinrichtung zugeordneten Zwischenregister festgehalten werden. Von dort aus werden diese momentanen Zählerstände anschließend von dem Mikroprozessor MP gelesen, um den Auftrittszeitpunkt des Steuersignals und damit der Synchronisierzelle, durch dessen bzw. deren Auftreten die gerade aufgetretene Unterbrechung des Mikroprozessors verursacht wurde, zu bestimmen. Der festgehaltene momentane Zählerstand der Zähleinrichtung C0 entspricht dabei aufgrund der genannten Unterbrechungsverzögerungszeit nicht dem momentanen Zählerstand beim tatsächlichen Auftreten des Steuersignals, d.h. es liegt zunächst ein Meßfehler vor. Da jedoch durch den momentanen Zählerstand der Zähleinrichtung C1 die Unterbrechungsverzögerungszeit erfaßt ist, wird für eine exakte Bestimmung des Auftrittszeitpunktes des betreffenden Steuersignals der momentane Zählerstand der Zähleinrichtung C1 von dem momentanen Zählerstand der Zähleinrichtung C0 subtrahiert. Damit ist die Bestimmung des Auftrittszeitpunktes des betreffenden Steuersignals abgeschlossen. Die vorstehend erläuterten Steuerungsvorgänge wiederholen sich dann mit jedem Auftreten eines Steuersignals.

Nach Durchlauf einer vollen Zählperiode der Zähleinrichtung C0 wird an deren Zählausgang OUT ein Steuersignal bereitgestellt, durch dessen Auftreten die Zähleinrichtung C2 synchronisiert wird, d.h. diese Zähleinrichtung startet damit einen neuen Zählzyklus, der entsprechend dem oben angegebenen Beispiel 48128 (D) Zählschritte umfaßt. Mit der oben angegebenen Folgefrequenz von 2,048 MHz der Zähltaktimpulsfolge ergibt sich daraus, daß durch die Zähleinrichtung C2 an einen Zählausgang OUT eine Taktimpulsfolge bereitgestellt wird, deren einzelne Taktimpulse mit einem Abstand von 23,5 ms periodisch wiederholt auftreten. Damit entspricht die Folgefrequenz dieser Taktimpulse der Folgefrequenz der durch die obengenannte Schnittstelleneinrichtung ATM-S erfassten Synchronisierzellen.

Im Normalfall, d.h. bei Auftreten von Synchronisierzellen in dem oben angegebenen zeitlichen Abstand von 23,5 ms ist die Zählperiode der Zähleinrichtung C0 ebenso wie die Zählperiode der Zähleinrichtung C2 auf einen Wert von 48128 (D) eingestellt, so daß die von den Synchronisierzellen abgeleiteten Steuersignale jeweils zu einem festgelegten, in der oben angegebenen Weise durch den Mikroprozessor MP ermittelten Auftrittszeitpunkt auftreten. Damit besteht eine feste Phasenbeziehung zwischen den Steuersignalen und den von der Zähleinrichtung C2 abgegebenen Taktimpulsen. Weicht nun der zeitliche Abstand der Synchronisierzellen und damit die gerade erwähnte Phasenbeziehung von dem vorgegebenen Wert ab, so wird die Zählperiode der Zähleinrichtung C0 entsprechend der jeweiligen Abweichung kurzzeitig durch den Mikroprozessor MP verändert, um die gewünschte Phasenbeziehung wieder herzustellen. Dazu wertet der Mikroprozessor die Auftrittszeitpunkte aufeinanderfolgender Steuersignale beispielsweise durch eine gewichtete Mittelwertbildung aus.

Vorstehend wurde die vorliegende Erfindung am Beispiel einer Mikroprozessoranordnung beschrieben, durch welche einerseits die Auftrittszeitpunkte von Synchronisierzellen innerhalb eines ATM-Kommunikationssystems ermittelt und andererseits Taktsignale bereitgestellt werden, die in einer festen Phasenbeziehung zu den Auftrittszeitpunkten dieser Synchronisierzellen stehen. Die vorliegende Erfindung ist jedoch nicht auf einen derartigen Einsatzfall beschränkt, sondern sie ist immer dann anwendbar, wenn die Auftrittszeitpunkte von Steuersignalen exakt zu bestimmen ist bzw. eine feste Phasenbeziehung zwischen diesen Auftrittszeitpunkten und bereitzustellenden Taktsignalen sicherzustellen ist. Außerdem sei noch darauf hingewiesen, daß zwar in der vorstehend beschriebenen Mikroprozessoranordnung die Zähleinrichtungen C0, C1 und C2 Bestandteil eines Zählbausteines vom Typ 82C54 sind.

Abweichend davon können diese Zähleinrichtungen jedoch auch anderweitig realisiert werden.

## Patentansprüche

1. Schaltungsanordnung zum Bestimmen der Auftrittszeitpunkte von einer Mikroprozessoranordnung als Unterbrechungssignale zugeführten Steuersignalen mit Hilfe der momentanen Zählerstände einer an ein Bussystem (ADR, DB, ST) eines der Mikroprozessoranordnung zugehörigen Mikroprozessors (MP) angeschlossenen, als Umlaufzähler ausgebildeten ersten Zähleinrichtung (C0), welche mit periodisch wiederholt auftretenden Zählimpulsen beaufschlagt ist, deren Folgefrequenz einem Mehrfachen der Folgefrequenz der betreffenden Steuersignale entspricht, und deren jeweiliger momentaner Zählerstand bei einem unterbrechungsfreien Zählbetrieb durch einen von dem Mikroprozessor auf das Auftreten eines Steuersignals hin über das Bussystem abgegebenen Lesebefehl zunächst festgehalten und anschließend von dem Mikroprozessor über das Bussystem übernehmbar ist,
**dadurch gekennzeichnet,**
daß eine zweite Zähleinrichtung (C1) vorgesehen ist, welche einerseits ebenfalls mit den Zählimpulsen beaufschlagt und andererseits lediglich mit dem Auftreten eines Steuersignals in einen mit einem festgelegten Anfangszählerstand beginnenden Zählzyklus gesteuert ist, daß der jeweilige momentane Zählerstand der zweiten Zähleinrichtung gleichzeitig mit dem jeweiligen momentanen Zählerstand der ersten Zähleinrichtung (C0) mit dem Auftreten eines Lesebefehls festgehalten und anschließend von dem Mikroprozessor über das Bussystem übernehmbar ist und daß durch den Mikroprozessor (MP) aus der Differenz der für die erste und die zweite Zähleinrichtung gleichzeitig festgehaltenen momentanen Zählerstände der Auftrittszeitpunkt des jeweiligen Steuersignals bestimmt ist.

2. Schaltungsanordnung nach Anspruch 1,
**dadurch gekennzeichnet,**
daß der jeweilige momentane Zählerstand auf das Auftreten eines Lesebefehls hin in einen der ersten bzw. zweiten Zähleinrichtung (C0 bzw. C1) zugeordneten Zwischenspeicher übernehmbar ist.

3. Schaltungsanordnung nach Anspruch 1 oder 2,
**dadurch gekennzeichnet,**
daß eine dritte, mit den Zählimpulsen beaufschlagte Zähleinrichtung (C2) vorgesehen ist, deren Zählperiode entsprechend dem Verhältnis der Folgefrequenz der Zählimpulse zu der mittleren Folgefrequenz der Steuersignale festgelegt ist und welche durch ein von der ersten Zähleinrichtung (C0) am Ende einer jeden Zählperiode abgegebenes Zählsignal synchronisiert ist,
und daß die Zählperiode der ersten Zähleinrichtung (C0) nach Maßgabe der durch den Mikroprozessor (MP) bestimmten Auftrittszeitpunkte einer Mehrzahl aufeinanderfolgender Steuersignale festgelegt ist.

4. Schaltungsanordnung nach einem der Ansprüche 1 bis 3,
**dadurch gekennzeichnet,**
daß die Zähleinrichtungen (C0, C1, C2) durch hinsichtlich des Zählbetriebes unabhängig voneinander programmierbare Zähleinrichtungen eines mit dem Bussystem des Mikroprozessors (MP) verbindbaren integrierten Zählerbausteines gebildet sind.
